# EUROPEAN PATENT APPLICATION

(11) **EP 4 023 697 A1**
(43) Date of publication of application: **06.07.2022**
(21) Application number: 21191130.0
(22) Date of filing: 12.08.2021
(51) Int. Cl.: C08G 63/183, C08G 63/91, C08J 5/18

(54) **POLYESTER COMPOSITION, ITS PREPARATION METHOD, AND POLYESTER COMPOSITION FILM COMPRISING THE SAME**

(30) Priority: 30.06.2021 CN 202110752096
(71) Applicant: Chang Chun Plastics Co., Ltd., Taipei City 104 (TW)
(72) Inventor: TSAI, Hsin-Hsien, Taipei City (TW); LIN, Te-Shun, Taipei City (TW)
(74) Representative: Tiburzi, Andrea

(57) **Abstract**

Provided are a polyester composition, its preparation method, and a polyester composition film comprising the same. The polyester composition comprises an aliphatic-aromatic copolyester modified with a monoepoxy compound. The acid value of the polyester composition is less than 25 meq KOH/kg. The polyester composition has great stability under conditions of high temperature and humidity. The polyester composition film made of the polyester composition has merits of few fish eyes and improved appearance, which is beneficial to product application.

## Description

### BACKGROUND

### 1. Field of the Disclosure

The instant disclosure relates to a polyester composition, its preparation method, and a polyester composition film comprising the same, more particular to an aliphatic-aromatic copolyester composition modified with a monoepoxy compound, its preparation method, and a polyester composition film comprising the same.

### 2. Description of the Prior Arts

Because polyester resin has the merits of good solvent resistance, wear resistance, chemical stability, gas blocking ability, and electric insulation, it is widely applied as a container, a wire, or a film in packaging industry, electronics industry, and vehicle industry. Since the goods related to electronic device or vehicle usually operate in a harsh condition of high temperature and humidity, the requirement for high stability of polyester material in the harsh condition is raised.

Polyester resin is synthesized by carboxylic acid and alcohol through condensation polymerization at high temperature. The monomers of polyester resin are connected to each other through great amount of ester groups. Due to the structure of ester groups, polyester resin is easily degraded when placed in the condition of high temperature and humidity for long time, which deteriorates its stability in the harsh condition and even restricts the application and value of polyester products.

Besides, films made of polyester resin usually have the defects of great amount of fish eyes, which results in poor appearance of polyester films and restricts the application and value of polyester products.

### SUMMARY OF THE DISCLOSURE

In view of this, an objective of the instant disclosure is to increase the stability of polyester resin in harsh condition of high temperature and humidity.

Another objective of the instant disclosure is to ameliorate polyester resin so that polyester film made of aforesaid polyester resin has less number of fish eyes and good appearance quality.

The other objective of the instant disclosure is to ameliorate polyester resin so that the application of polyester products is extended and the value of polyester products is raised.

To achieve aforementioned objective, the instant disclosure provides a polyester composition comprising an aliphatic-aromatic copolyester modified with a monoepoxy compound. The acid value (abbreviated as AV) of the polyester composition is less than 25 milliequivalents potassium hydroxide per kilogram (abbreviated as meq KOH/kg).

According to the instant disclosure, by modifying the aliphatic-aromatic copolyester with the monoepoxy compound, the polyester composition of the instant disclosure has low acid value, which results in that the polyester composition of the instant disclosure has high stability in the condition of high temperature and humidity and that the polyester film made of aforesaid polyester composition has low number of fish eyes and good appearance quality. Aforesaid advantages are beneficial to extend the application and to increase the value of polyester products.

Preferably, the acid value of the polyester composition may be less than or equal to 21 meq KOH/kg. More preferably, the acid value of the polyester composition may be greater than or equal to 5 meq KOH/kg and less than or equal to 21 meq KOH/kg. Optionally, the acid value of the polyester composition may be, but is not limited to, 5 meq KOH/kg, 6 meq KOH/kg, 7 meq KOH/kg, 8 meq KOH/kg,···, 20 meq KOH/kg or 21 meq KOH/kg. The acid value of the polyester composition may fall within the ranges between any two of the above values.

In one of the embodiments, the weight average molecular weight (abbreviated as Mw) of the polyester composition may be greater than or equal to 100000 and less than or equal to 150000. Optionally, the Mw of the polyester composition may be, but is not limited to, 100000, 105000, 110000, 115000, 120000, 125000, 130000, 135000, 140000, 145000 or 150000. The Mw of the polyester composition may fall within the ranges between any two of the above values.

In one of the embodiments, the number average molecular weight (abbreviated as Mn) of the polyester composition may be greater than or equal to 20000 and less than or equal to 40000. Optionally, the Mn of the polyester composition may be, but is not limited to, 20000, 25000, 30000, 35000 or 40000. The Mn of the polyester composition may fall within the ranges between any two of the above values.

In one of the embodiments, the structure of the aliphatic-aromatic copolyester modified with the monoepoxy compound in the polyester composition may be represented by the following Formula (I): 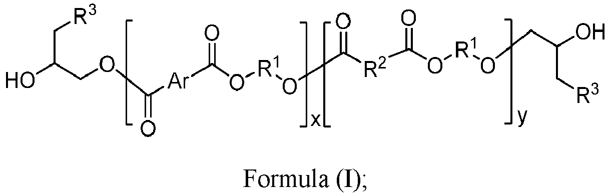 wherein, Ar is a phenylene group, R¹ is an alkylene group having 2 to 12 carbon atoms, R² is an alkylene group having 2 to 12 carbon atoms, R³ is an ether group having 4 to 30 carbon atoms or an ester group having 4 to 30 carbon atoms, and the ratio of x to y (abbreviated as x/y) may be greater than or equal to 0.8 and less than or equal to 1.2.

Specifically, as shown in the above Formula (I), the aliphatic-aromatic copolyester modified with the monoepoxy compound does not comprise any amide group. According to this, the polyester composition of the instant disclosure can be manufactured by eco-friendly process.

In one of the embodiments, the R¹ in the Formula (I) may be a straight-chain alkylene group or a branched alkylene group. Aforesaid alkylene group may be, but is not limited to,

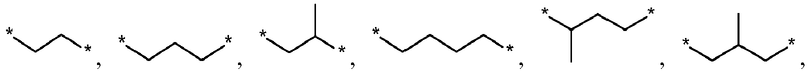

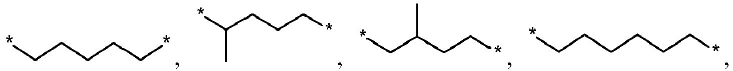

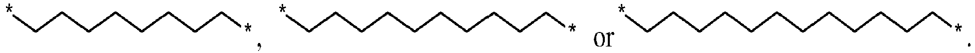

In one of the embodiments, the R² in the Formula (I) may be a straight-chain alkylene group or a branched alkylene group. Aforesaid alkylene group may be, but is not limited to,

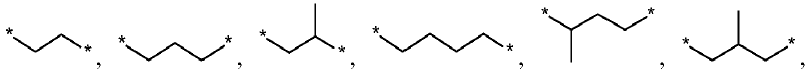

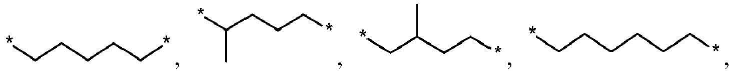

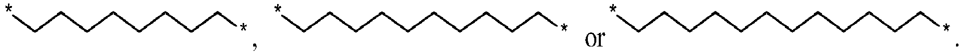

Preferably, the R¹ in the Formula (I) may be

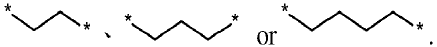

Preferably, the R² in the Formula (I) may be

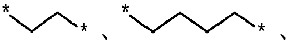

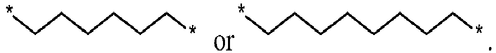

Preferably, the Ar in the Formula (I) may be

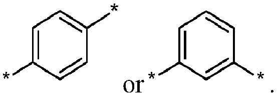

Preferably, the R³ in the Formula (I) may be selected from a group consisting of a straight-chain ether group having 4 to 16 carbon atoms, a branched ether group having 4 to 16 carbon atoms, a straight-chain ester group having 4 to 16 carbon atoms and a branched ester group having 4 to 16 carbon atoms.

More preferably, the R³ in the Formula (I) may be, but is not limited to,

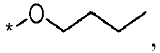

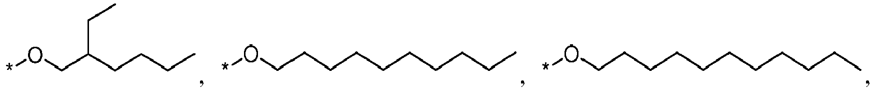

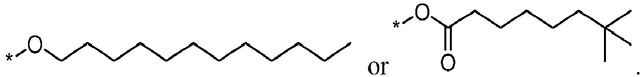

In one of the embodiments, the x/y in the Formula (I) may be greater than or equal to 0.9 and less than or equal to 1.0.

In one of the embodiments, the melt flow index (abbreviated as MI) of the polyester composition may be greater than or equal to 1 gram per 10 minutes (g/10 min) and less than or equal to 30 g/10 min. Optionally, the MI of the polyester composition may be, but is not limited to, 1 g/10 min, 2 g/10 min, 3 g/10 min, 4 g/10 min , 5 g/10 min , 6 g/10 min , 7 g/10 min, 8 g/10 min, 9 g/10 min, 10 g/10 min, 11 g/10 min, 12 g/10 min, 13 g/10 min, 14 g/10 min, 15 g/10 min, 16 g/10 min, 17 g/10 min, 18 g/10 min, 19 g/10 min, 20 g/10 min, 21 g/10 min, 22 g/10 min, 23 g/10 min, 24 g/10 min, 25 g/10 min, 26 g/10 min, 27 g/10 min, 28 g/10 min, 29 g/10 min or 30 g/10 min. The MI of the polyester composition may fall within the ranges between any two of the above values. In another embodiment, the MI of the polyester composition may be greater than or equal to 2.5 g/10 min and less than or equal to 4.1 g/10 min. In further another embodiment, the MI of the polyester embodiment may be greater than or equal to 10 g/10 min and less than or equal to 20 g/10 min.

In one of the embodiments, the intrinsic viscosity (abbreviated as IV) of the polyester composition may be greater than or equal to 0.5 deciliter per gram (dL/g) and less than or equal to 2.0 dL/g. Optionally, the IV of the polyester composition may be, but is not limited to, 0.5 dL/g, 0.6 dL/g, 0.7 dL/g, 0.8 dL/g, 0.9 dL/g, 1.0 dL/g, 1.1 dL/g, 1.2 dL/g, 1.3 dL/g, 1.4 dL/g, 1.5 dL/g, 1.6 dL/g, 1.7 dL/g, 1.8 dL/g, 1.9 dL/g or 2.0 dL/g. The IV of the polyester composition may fall within the ranges between any two of the above values. In another embodiment, the IV of the polyester composition may be greater than or equal to 1.0 dL/g and less than or equal to 1.5 dL/g.

The difference of acid values of the polyester composition before and after it is placed in the condition of high temperature and humidity for 1 hour is less than 3 meq KOH/kg. Hence, the polyester composition of the instant disclosure has great stability to resist the harsh condition of high temperature and humidity.

The difference of acid values of the polyester composition before and after it is placed in the condition of high temperature and humidity for 3 hours is less than 10 meq KOH/kg. Preferably, aforesaid difference is less than 8 meq KOH/kg. Herein, the temperature may be, but is not limited to, greater than or equal to 100°C and less than or equal to 150°C, the pressure may be, but is not limited to, greater than or equal to 2 atmosphere (atm) and less than or equal to 3 atm, and the relative humidity may be, but is not limited to, greater than or equal to 95% and less than or equal to 100% in aforesaid condition of high temperature and humidity. Specifically, the temperature is about 121°C, the pressure is about 2 atm, and the relative humidity is about 100% in aforesaid condition of high temperature and humidity.

In addition, the instant disclosure provides a preparation method of a polyester composition comprising following steps:
Step (a): esterifying an aliphatic dicarboxylic acid having 4 to 14 carbon atoms and an aromatic dicarboxylic acid or diester having 8 to 12 carbon atoms with an aliphatic diol having 2 to 12 carbon atoms to render an esterified compound; wherein, the molar ratio of the aliphatic dicarboxylic acid having 4 to 14 carbon atoms to the aromatic dicarboxylic acid or diester having 8 to 12 carbon atoms ranges from 1:0.8 to 1:1.2, and the molar ratio of the sum of the aliphatic dicarboxylic acid having 4 to 14 carbon atoms and the aromatic dicarboxylic acid or diester having 8 to 12 carbon atoms to the aliphatic diol having 2 to 12 carbon atoms ranges from 1:1.5 to 1:2.5;
Step (b): subjecting the esterified compound to condensation polymerization in the presence of a catalyst to render a condensation polymer; and
Step (c): reacting the condensation polymer with a monoepoxy compound to render the polyester composition; wherein, the weight of the monoepoxy compound is greater than or equal to 6000 ppm and less than or equal to 12000 ppm based on the total weight of the aliphatic dicarboxylic acid having 4 to 14 carbon atoms, the aromatic dicarboxylic acid or diester having 8 to 12 carbon atoms, and the aliphatic diol having 2 to 12 carbon atoms.

In one of the embodiments, the aliphatic dicarboxylic acid having 4 to 14 carbon atoms may be butanedioic acid, pentanedioic acid, hexanedioic acid, heptanedioic acid, octanedioic acid, nonanedioic acid, decanedioic acid, undecanedioic acid, dodecanedioic acid, tridecanedioic acid or tetradecanedioic acid. Preferably, the aliphatic dicarboxylic acid having 4 to 14 carbon atoms may be butanedioic acid, hexanedioic acid, octanedioic acid or decanedioic acid.

In one of the embodiments, the aromatic dicarboxylic acid or diester having 8 to 12 carbon atoms may be terephthalic acid, isophthalic acid, dimethyl terephthalate, dimethyl isophthalate, diethyl terephthalate or diethyl isophthalate. Preferably, the aromatic dicarboxylic acid or diester having 8 to 12 carbon atoms may be terephthalic acid or isophthalic acid.

In one of the embodiments, the aliphatic diol having 2 to 12 carbon atoms may be ethanediol, propanediol, butanediol, pentanediol, hexanediol, heptanediol, octanediol, nonanediol, decanediol, undecanediol or dodecanediol. Preferably, the aliphatic diol having 2 to 12 carbon atoms may be ethanediol, propanediol or butanediol.

Preferably, the molar ratio of the aliphatic dicarboxylic acid having 4 to 14 carbon atoms to the aromatic dicarboxylic acid or diester having 8 to 12 carbon atoms may range from 1:0.8 to 1:1.0.

Preferably, the molar ratio of the sum of the aliphatic dicarboxylic acid having 4 to 14 carbon atoms and the aromatic dicarboxylic acid or diester having 8 to 12 carbon atoms to the aliphatic diol having 2 to 12 carbon atoms may range from 1:1.8 to 1:2.2.

In one of the embodiments, the catalyst may be, but is not limited to, a titanium catalyst, antimony catalyst, germanium catalyst, zirconium catalyst or any combination thereof. For example, aforesaid titanium catalyst may be, but is not limited to, titanium(IV) butoxide (TBT), titanium(IV) isopropoxide (TPT) or the combination thereof. Aforesaid antimony catalyst may be, but is not limited to, antimony glycolate, antimony trioxide or the combination thereof. Preferably, the catalyst may be a titanium catalyst.

In one of the embodiments, the weight of the catalyst may be greater than or equal to 750 ppm and less than or equal to 1000 ppm based on the total weight of the aliphatic dicarboxylic acid having 4 to 14 carbon atoms, the aromatic dicarboxylic acid or diester having 8 to 12 carbon atoms, and the aliphatic diol having 2 to 12 carbon atoms.

Optionally, the weight of the monoepoxy compound may be, but is not limited to, 6000 ppm, 6500 ppm, 7000 ppm, 7500 ppm, 8000 ppm, 8500 ppm, 9000 ppm, 9500 ppm, 10000 ppm, 10500 ppm, 11000 ppm, 11500 ppm or 12000 ppm based on the total weight of the aliphatic dicarboxylic acid having 4 to 14 carbon atoms, the aromatic dicarboxylic acid or diester having 8 to 12 carbon atoms, and the aliphatic diol having 2 to 12 carbon atoms. The weight of the monoepoxy compound may fall within the ranges between any two of the above values. In one of the embodiments, the weight of the monoepoxy compound may be greater than or equal to 8000 ppm and less than or equal to 12000 ppm based on the total weight of the aliphatic dicarboxylic acid having 4 to 14 carbon atoms, the aromatic dicarboxylic acid or diester having 8 to 12 carbon atoms, and the aliphatic diol having 2 to 12 carbon atoms.

Preferably, the monoepoxy compound may be aliphatic glycidyl ether (C12-C14) (CAS No. 68609-97-2), neodecanic acid glycidyl ester (CAS No. 26761-45-5), n-butyl glycidyl ether (CAS No. 2426-08-6) or 2-ethylhexyl glycidyl ether (CAS No. 2461-15-6).

In one of the embodiments, the MI of the condensation polymer may be greater than or equal to 1 g/10min and less than or equal to 30 g/10min. Optionally, the MI of the condensation polymer may be, but is not limited to, 1 g/lOmin, 2 g/lOmin, 3 g/lOmin, 4 g/lOmin, 5 g/lOmin, 6 g/10min,···, 29 g/10min or 30 g/10min. The MI of the polyester compound may fall within the ranges between any two of the above values. In another embodiment, the MI of the condensation polymer may be greater than or equal to 1 g/10min and less than or equal to 20 g/10min.

In one of the embodiments, the temperature of the esterification in aforesaid Step (a) may be greater than or equal to 180°C and less than or equal to 260°C, and the pressure of the esterification in aforesaid Step (a) may be greater than or equal to 40 kPa and less than or equal to 120 kPa. Preferably, the temperature of the esterification in aforesaid Step (a) may be greater than or equal to 200°C and less than or equal to 240°C, and the pressure of the esterification in aforesaid Step (a) may be greater than or equal to 50 kPa and less than or equal to 110 kPa.

In one of the embodiments, the temperature of the condensation polymerization in aforesaid Step (b) may be greater than or equal to 180°C and less than or equal to 280°C, and the pressure of the condensation polymerization in aforesaid Step (b) may be less than 0.1 kPa. Preferably, the temperature of the condensation polymerization in aforesaid Step (b) may be greater than or equal to 200°C and less than or equal to 260°C.

In one of the embodiments, the temperature of the reaction in aforesaid Step (c) may be greater than or equal to 160°C and less than or equal to 240°C, and the pressure of the reaction in aforesaid Step (c) may be less than 0.1 kPa. Preferably, the temperature of the reaction in aforesaid Step (c) may be greater than or equal to 180°C and less than or equal to 220°C.

In accordance with the instant disclosure, isocyanate and its derivative are not used in the preparation method of the polyester composition, which is able to meet the requirement for eco-friendly process.

Moreover, the instant disclosure provides a polyester composition film made of the polyester composition of the instant disclosure. The number of fish eyes having an outer diameter greater than 200 µm is less than 100/m² in the polyester composition film. In other words, there are less than 100 fish eyes having an outer diameter greater than 200 µm in 1 m² polyester composition film.

Optionally, the number of fish eyes having an outer diameter greater than 200 µm may be, but is not limited to, 10/m², 20/m², 30/m², 40/m², 50/m², 60/m², 70/m², 80/m² or 90/m² in the polyester composition film. The number of fish eyes may fall within the ranges between any two of the above values.

According to the instant disclosure, the polyester composition film made of aforesaid polyester composition has great stability in the condition of high temperature and humidity and low number of fish eyes, which is able to extend the application field of the polyester composition film and the product thereof and to increase the value of the polyester composition film and the product thereof.

In one of the embodiments, the number of fish eyes having an outer diameter greater than 500 µm may be less than 50/m² in the polyester composition film. Preferably, the number of fish eyes having an outer diameter greater than 500 µm may be less than 25/m².

In one of the embodiments, the haze of the polyester composition film may be less than or equal to 35%. Optionally, the haze of the polyester composition film may be, but is not limited to, 20%, 21%, 22%, 23%, 24%, 25%, 26%, 27%, 28%, 29%, 30%, 31%, 32%, 33%, 34% or 35%. The haze of the polyester composition film may fall within the ranges between any two of the above values. In another embodiment, the haze of the polyester composition may be greater than or equal to 28% and less than or equal to 35%.

In one of the embodiments, the thickness of the polyester composition film may be greater than or equal to 10 µm and less than or equal to 100 µm. Preferably, the thickness of the polyester composition film may be greater than or equal to 30 µm and less than or equal to 70 µm.

Other objectives, advantages and novel features of the instant disclosure will become more apparent from the following detailed description when taken in conjunction with the accompanying drawings.

### BRIEF DESCRIPTION OF THE DRAWINGS

FIG. 1 shows the gas chromatography-mass (GC-MS) of the polyester composition of Example 1 after alcoholysis.
FIG. 2 shows the GC-MS of the polyester composition of Example 2 after alcoholysis.
FIG. 3 shows the GC-MS of the polyester composition of Example 3 after alcoholysis.
FIG. 4 is an partially enlarged view of FIG. 3.

### DETAILED DESCRIPTION OF THE DISCLOSURE

Hereinafter, one skilled in the art can easily realize the advantages and effects of the instant disclosure from the following examples. Therefore, it should be understood that the descriptions proposed herein are just preferable examples for the purpose of illustrations only, not intended to limit the scope of the disclosure. Various modifications and variations could be made in order to practice or apply the instant disclosure without departing from the spirit and scope of the instant disclosure.

### Polyester Composition

### Examples 1 to 3

Polyester compositions of Examples 1 to 3 were manufactured in similar processes as follows.

First, a mixture of terephthalic acid (375 g), hexanedioic acid (370 g), and 1,4-butanediol (860 g) was charged into a 3-liter autoclave. The temperature of the autoclave was set to be 200°C to 240°C, and the pressure of the autoclave was set to be 50 kPa to 110 kPa. Under this condition, the esterification was carried out for 2 hours to 3 hours to render an esterified compound.

Subsequently, a titanium catalyst (750 ppm to 1000 ppm) was added to aforesaid esterified compound, and the condensation polymerization was carried out at the temperature of 200°C to 260°C and under the pressure less than 0.1 kPa for 4.5 hours to 6 hours to render a condensation polymer.

Last, a moderate amount of a monoepoxy compound was added to the condensation polymer, and the reaction was carried out at the temperature of 180°C to 220°C and under the pressure less than 0.1 kPa for 0.5 hour to 1 hour. Then granulation was carried out to obtain the polyester composition.

The differences between the preparation methods of the polyester composition of Examples 1 to 3 were the monoepoxy compound and the amount thereof. The name, CAS No., and amount of the monoepoxy compound used in Examples 1 to 3 are listed in Table 1. Wherein, the amounts of the monoepoxy compound and the titanium catalyst used in each Example were yielded based on the total weight of aforesaid terephthalic acid, hexanedioic acid, and 1,4-butanediol.

**Table 1: name, CAS No., amount of monoepoxy compound used in Examples 1 to 3 (E1 to E3)**

| Monoepoxy Compound | | | |
|---|---|---|---|
| Sample | Name | CAS No. | Amount |
| E1 | neodecanic acid glycidyl ester | 26761-45-5 | 8000 ppm |
| E2 | aliphatic glycidyl ether (C12-C14) | 68609-97-2 | 8000 ppm |
| E3 | *n*-butyl glycidyl ether | 2426-08-6 | 12000 ppm |

### Comparative Example 1

The difference between Comparative Example 1 and Examples 1 to 3 was that the monoepoxy compound was not added in Comparative Example 1. The process is illustrated as follows.

First, a mixture of terephthalic acid (375 g), hexanedioic acid (370 g), and 1,4-butanediol (860 g) was charged into a 3-liter autoclave. The temperature of the autoclave was set to be 200°C to 240°C, and the pressure of the autoclave was set to be 50 kPa to 110 kPa, and esterification was carried out for 2 hours to 3 hours to render an esterified compound.

Subsequently, a titanium catalyst (750 ppm to 1000 ppm) was added to aforesaid esterified compound, and the condensation polymerization was carried out at the temperature of 200°C to 260°C and under the pressure less than 0.1 kPa for 4.5 hours to 6 hours. Then granulation was carried out to obtain the polyester composition of Comparative Example 1.

As shown in aforesaid process, the monoepoxy compound was not added after condensation polymerization. In other words, the polyester composition of Comparative Example 1 was the same as aforesaid condensation polymer of Examples 1 to 3.

### Comparative Example 2

The difference between Comparative Example 2 and Examples 1 to 3 was that the multiepoxy compound was added after condensation polymerization in Comparative Example 2. The process is illustrated as follows.

First, a mixture of terephthalic acid (375 g), hexanedioic acid (370 g), and 1,4-butanediol (860 g) was charged into a 3-liter autoclave. The temperature of the autoclave was set to be 200°C to 240°C, and the pressure of the autoclave was set to be 50 kPa to 110 kPa, and esterification was carried out for 2 hours to 3 hours to render an esterified compound.

Subsequently, a titanium catalyst (750 ppm to 1000 ppm) was added to aforesaid esterified compound, and the condensation polymerization was carried out at the temperature of 200°C to 260°C and under the pressure less than 0.1 kPa for 4.5 hours to 6 hours to render a condensation polymer.

Last, BASF Joncryl ADR 4468 (8000 ppm) (CAS No. 2254076-90-7) was added to the condensation polymer, and the reaction was carried out at the temperature of 180°C to 220°C and under the pressure less than 0.1 kPa for 0.5 hour to 1 hour. Then granulation was carried out to obtain the polyester composition of Comparative Example 2.

The BASF Joncryl ADR 4468 was a multiepoxy compound, which was different from the monoepoxy compound used in Examples 1 to 3. Specifically, aforesaid BASF Joncryl ADR 4468 had the chemical structure represented as follows:

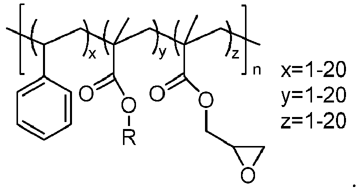

### Comparative Example 3

The difference between Comparative Example 3 and Examples 1 to 3 was that the isocyanate compound was added after condensation polymerization in Comparative Example 3. The process is illustrated as follows.

First, a mixture of terephthalic acid (375 g), hexanedioic acid (370 g), and 1,4-butanediol (860 g) was charged into a 3-liter autoclave. The temperature of the autoclave was set to be 200°C to 240°C, and the pressure of the autoclave was set to be 50 kPa to 110 kPa, and esterification was carried out for 2 hours to 3 hours to render an esterified compound.

Subsequently, a titanium catalyst (750 ppm to 1000 ppm) was added to aforesaid esterified compound, and the condensation polymerization was carried out at the temperature of 200°C to 260°C and under the pressure less than 0.1 kPa for 4.5 hours to 6 hours to render a condensation polymer.

Last, hexamethylene diisocyanate (8000 ppm) (abbreviated as HDI, CAS No. 822-06-0) was added to the condensation polymer, and the reaction was carried out at the temperature of 180°C to 220°C and under the pressure less than 0.1 kPa for 0.5 hour to 1 hour. Then granulation was carried out to obtain the polyester composition of Comparative Example 3.

### Comparative Example 4

The difference between Comparative Example 4 and Examples 1 to 3 was the amount of the monoepoxy compound used in Comparative Example 4. The process is illustrated as follows.

First, a mixture of terephthalic acid (375 g), hexanedioic acid (370 g), and 1,4-butanediol (860 g) was charged into a 3-liter autoclave. The temperature of the autoclave was set to be 200°C to 240°C, and the pressure of the autoclave was set to be 50 kPa to 110 kPa, and esterification was carried out for 2 hours to 3 hours to render an esterified compound.

Subsequently, a titanium catalyst (750 ppm to 1000 ppm) was added to aforesaid esterified compound, and the condensation polymerization was carried out at the temperature of 200°C to 260°C and under the pressure less than 0.1 kPa for 4.5 hours to 6 hours to render a condensation polymer.

Last, neodecanic acid glycidyl ester (4000 ppm) was added to the condensation polymer, and the reaction was carried out at the temperature of 180°C to 220°C and under the pressure less than 0.1 kPa for 0.5 hour to 1 hour. Then granulation was carried out to obtain the polyester composition of Comparative Example 4.

### Test Example 1: GC-MS

The polyester compositions of Examples 1 to 3 were used as test samples and analyzed by GC-MS (manufacturer: Shimadzu, model: QP-2020).

In this Test Example, each test sample (1.0 g) was weighed and added to 30 ml methanol (including 30 ppm zinc acetate). The mixture was reacted at 225°C for 2 hours and cooled down to room temperature. Then the mixture was stirred and filtered to render a test liquid. The test liquid was put into a tube (manufacturer: Phenomenex, model: ZB-5) to undergo a qualitative analysis. The GC-MS of each test sample was yielded.

In addition, the monoepoxy compound corresponding to each test sample was analyzed. The monoepoxy compound (0.02 g) was weighed and added to 30 ml methanol (including 30 ppm zinc acetate). Then the mixture was stirred and filtered to render a test liquid. The test liquid was put into a tube (manufacturer: Phenomenex, model: ZB-5) to undergo an analysis. The GC-MS of monoepoxy compound and aforesaid GC-MS of each test sample were combined to perform map overlay analysis.

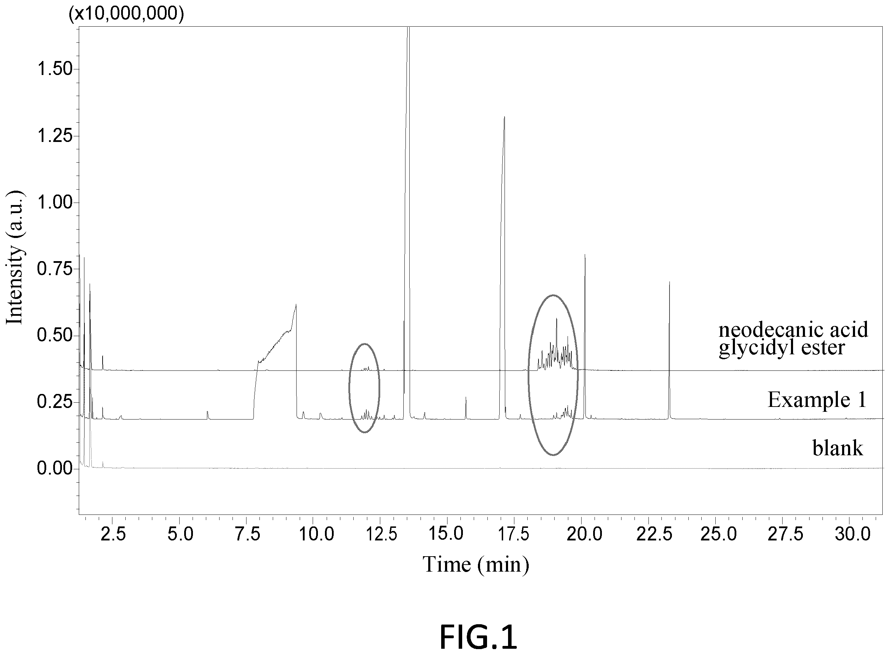

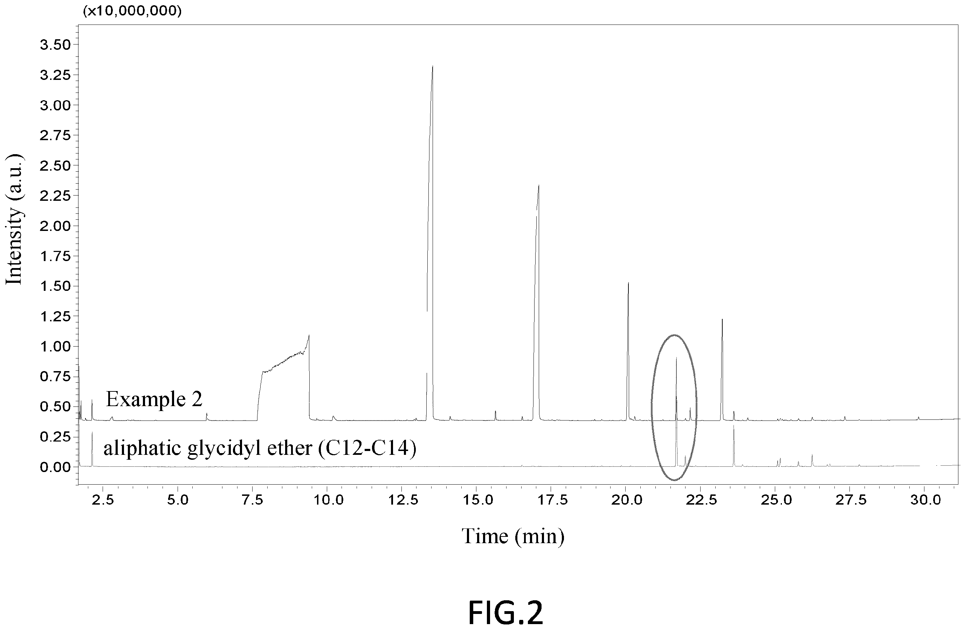

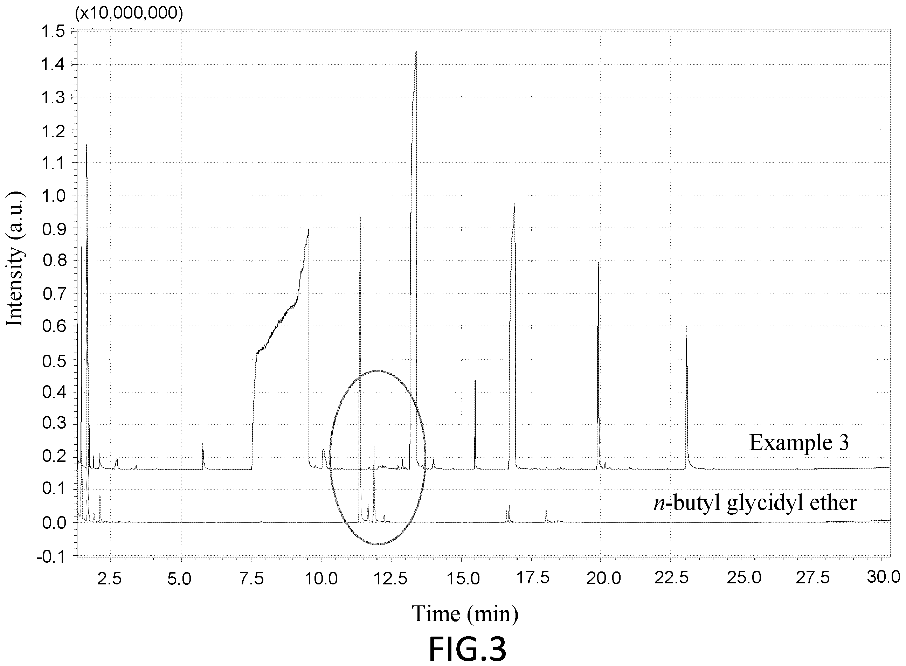

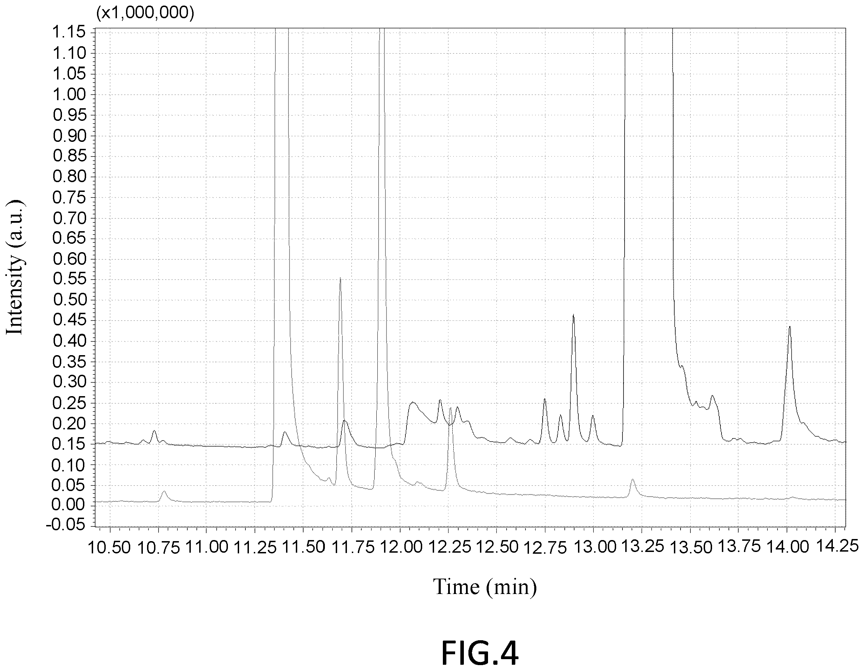

As shown in FIG.1 to FIG.4, the GC-MS of the polyester composition after alcoholysis had the same signal as characteristic peak of the corresponding monoepoxy compound, which showed that the monoepoxy compound was reacted to the condensation polymer. The Test Example proved that the polyester composition of Examples 1 to 3 comprised poly(butylene adipate-co-terephthalate) modified with monoepoxy compound (PBAT modified with monoepoxy compound).

### Test Example 2: Weight Average Molecular Weight (Mw) and Number Average Molecular Weight (Mn)

The polyester composition of Examples 1 to 3 and Comparative Examples 1 to 3 were used as test samples and analyzed by gel permeation chromatography (GPC). The results of Mw and Mn of each test sample are listed in Table 2.

**Table 2: Mw, Mn of Examples 1 to 3 (E1 to E3) and Comparative Examples (C1 to C3)**

| Sample | Mw | Mn |
|---|---|---|
| E1 | 146206 | 36071 |
| E2 | 146818 | 33270 |
| E3 | 117934 | 29058 |
| C1 | 138047 | 31681 |
| C2 | 147495 | 31124 |
| C3 | 147361 | 35462 |

As shown in Table 2, the Mw of the polyester compositions of Examples 1 to 3 was greater than or equal to 100000 and less than or equal to 150000, and the Mn of the polyester compositions of Examples 1 to 3 was greater than or equal to 25000 and less than or equal to 40000.

### Test Example 3: Melt Flow Index (MI)

The polyester compositions of Examples 1 to 3 and Comparative Examples 1 to 4 were used as test samples. Aforesaid test samples were analyzed by melt flow indexer (model: LMI5000) according to ISO 1133-1:2011(E).

Before analysis, each test sample was put in the hot air circulation oven in the temperature of 80±2°C for 4 hours to remove all the moisture attached on the test sample. Afterward, test sample (4 g to 8 g) was put in a 190°C heating tube. After the test sample was preheated, weights were added. The weight of the test sample was recorded after 10 minutes, each test sample was tested twice, and the average thereof was yielded. The results are listed in Table 3.

### Test Example 4: Intrinsic Viscosity (IV)

The polyester compositions of Examples 1 to 3 and Comparative Examples 1 to 4 were used as test samples. Aforesaid test samples were analyzed by glass capillary viscometer according to ASTM D2857.

Before analysis, each test sample was dissolved in 2-chlorophenol to render a testing liquid with concentration ranging from 1.4 g/dL to 1.5 g/dL. Then the IV of each testing liquid was measured at 35°C. The results are listed in Table 3.

### Test Example 5: Acid Value (AV)

The polyester compositions of Examples 1 to 3 and Comparative Examples 1 to 4 were used as test samples. Aforesaid test samples were analyzed by 725 Dosimat titrator (manufacturer: Metrohm).

In this Test Example, each test sample (0.4 g to 0.6 g) was put into a 100 ml dry sample bottle, and o-cresol (30 ml to 50 ml) was added to aforesaid sample bottle. Aforesaid sample bottle was placed on a hot plate stirrer. The solution was stirred and heated at 110±5°C for about 30 minutes till the solid was completely dissolved. Then the solution was cooled down to room temperature and ready for titration.

Then 3 ml of 0.01 N potassium chloride (KCl) solution was added to aforesaid solution and stirred for about 1 minute to render a testing liquid. The concentration of titrant (0.03 N KOH solution), blank, and the parameters of titration were set in 725 Dosimat titrator. Then the electrode was immersed in the testing liquid, the button of start was pressed to process the potentiometric titration. The results are listed in Tables 3 and 4.

**Table 3: melt flow index (MI), intrinsic viscosity (IV), and acid value (AV) of Examples 1 to 3 (E1 to E3) and Comparative Examples 1 to 4 (C1 to C4)**

| Polyester Composition | | | |
|---|---|---|---|
| Sample | MI (g/10 min) | IV (dL/g) | AV (meq KOH/kg) |
| E1 | 4.02 | 1.49 | 12.81 |
| E2 | 3.9 | 1.48 | 20.74 |
| E3 | 15.6 | 1.22 | 9.86 |
| C1 | 4.2 | 1.5 | 49.52 |
| C2 | 2.4 | 1.6 | 17.8 |
| C3 | 1.25 | 1.67 | 20.3 |
| C4 | 8.2 | 1.3 | 40.1 |

As shown in Table 3, the MI of the polyester compositions of Examples 1 to 3 was greater than or equal to 1 g/10 min and less than or equal to 30 g/10 min, the IV of the polyester compositions of Examples 1 to 3 was greater than or equal to 1.0 dL/g and less than or equal to 1.5 dL/g, and the acid value of the polyester compositions of Examples 1 to 3 was less than 25 meq KOH/kg.

On the aspect of acid value, the AV of the polyester compositions of Examples 1 to 3 was significantly lower than the AV of the polyester compositions of Comparative Examples 1 and 4, which showed that the polyester compositions of Comparative Examples 1 and 4 could not resist the harsh condition of high temperature and humidity. Therefore, polyester compositions of Examples 1 to 3 and Comparative Examples 1 to 3 were chosen to further evaluate the ability of resistance to the condition of high temperature and humidity in the following Test Example 6.

### Test Example 6: Stability

The polyester compositions of Examples 1 to 3 and Comparative Examples 1 to 3 were used as test samples. Aforesaid test samples were analyzed by 725 Dosimat titrator (manufacturer: Metrohm), which was the same as Test Example 5.

Each test sample (about 10 g) was added to a 150 ml glass container which was full of water and sealed tightly. The 150 ml glass container was kept in the environment under conditions of saturated vapor pressure, temperature of 121°C, pressure of 2 atm, and relative humidity of 100%. Part of hydrolyzed test sample (1.5 g) was took out per hour. Aforesaid hydrolyzed test sample was tested as aforesaid Test Example 5 thrice to render the average of acid value. The results are listed in Table 4. Herein, that the difference between initial acid value of test sample and acid value of hydrolyzed test sample was lower represented that the ability to resist hydrolysis and the stability were better.

**Table 4: initial acid value of Examples 1 to 3 (E1 to E3) and Comparative Examples 1 to 3 (C1 to C3) (AV₀), acid values of E1 to E3 and C1 to C3 after placed in the condition of high temperature and humidity for 1 hour (AV₁), acid value of E1 to E3 and C1 to C3 after placed in the condition of high temperature and humidity for 2 hours (AV2), acid value of E1 to E3 and C1 to C3 after placed in the condition of high temperature and humidity for 3 hours (AV3), and the difference of acid value of E1 to E3 and C1 to C3 before and after placed in the condition of high temperature and humidity for 3 hours**

| Acid Value (meq KOH/kg) | | | | | |
|---|---|---|---|---|---|
| Sample | AV₀ | AV₁ | AV₂ | AV₃ | Difference between AV₀ and AV₃ |
| E1 | 12.81 | 15.47 | 18.26 | 19.01 | 6.2 |
| E2 | 20.74 | 22.72 | 25.5 | 27.13 | 6.39 |
| E3 | 9.86 | 12.82 | 14.59 | 17.13 | 7.27 |
| C1 | 49.52 | 55.43 | 60.51 | 65.33 | 15.81 |
| C2 | 17.8 | 20.12 | 22.1 | 23.9 | 6.1 |
| C3 | 20.3 | 23.41 | 27.19 | 31.00 | 10.7 |

As shown in Table 4, the initial acid value of the polyester compositions of Examples 1 to 3 was less than 25 meq KOH/kg. The difference of acid values of the polyester composition of Examples 1 to 3 before and after it was placed in the condition of high temperature and humidity for 1 hour was less than 3 meq KOH/kg. The difference of acid values of the polyester composition of Examples 1 to 3 before and after it was placed in the condition of high temperature and humidity for 2 hours was less than 6 meq KOH/kg. The difference of acid values of the polyester composition of Examples 1 to 3 before and after it was placed in the condition of high temperature and humidity for 3 hours was less than 10 meq KOH/kg.

### Polyester Composition Film

### Examples 1A to 3A and Comparative Examples 1A to 3A

The polyester composition films of Examples 1A to 3A and Comparative Examples 1A to 3A were made of the polyester compositions of Examples 1 to 3 and Comparative Examples 1 to 3. Aforesaid polyester compositions were processed by casting film machine (manufacturer: Xplore, model: MC15) to render the polyester composition films of Examples 1A to 3A and Comparative Examples 1A to 3A.

At the process of film manufacturing, the feeding speed was set to be 5 rpm to 20 rpm, the screw speed was set to be 8 rpm, the screw torque was set to be 4 N·m to 20 N·m, the space between feeding section and discharging section was divided into three areas, the temperature of each area from feeding section to discharging section was set to be 150°C, 160°C, and 160°C separately, and the temperature of the discharging die was set to be 170°C. After film manufacturing, the torque of wind up roll was adjusted and then the polyester composition film with a width of 5 cm and a thickness of 50 µm was yielded.

### Test Example 7: Fish Eye

The polyester composition films of Examples 1A to 3A and Comparative Examples 1A to 3A were used as test samples. Aforesaid test samples were analyzed by optical scanner (manufacturer: ISRA, model: 277408_PJ-SMASH), and the number of fish eyes having an outer diameter greater than 200 µm was measured. The results are listed in Table 5.

### Test Example 8: Haze

The polyester composition films of Examples 1A to 3A and Comparative Examples 1A to 3A were used as test samples. Aforesaid test samples were analyzed by spectrophotometer (manufacture: PerkinElmer, model: UV Lambda 950) according to ASTM 1003-92. Herein, the wavelength ranged from 350 nm to 700 nm. The lower haze represented the greater transparency. The results are listed in Table 5.

**Table 5: number of fish eyes having an outer diameter greater than or equal to 200 µm and less than or equal to 500 µm (abbreviated as number of small fish eyes), number of fish eyes having an outer diameter greater than 500 µm (abbreviated as number of large fish eyes), and total number of fish eyes in Examples 1A to 3A (E1A to E3A) and Comparative Examples 1A to 3A (C1A to C3A), and haze of E1A to E3A and C1A to C3A (unit of number of fish eyes: 1/m²)**

| Polyester Composition Film | | | | |
|---|---|---|---|---|
| Sample | Number of Small Fish Eves | Number of Large Fish Eves | Total Number of Fish Eves | Haze (%) |
| E1A | 21 | 4 | 25 | 29.78 |
| E2A | 34 | 12 | 46 | 29.15 |
| E3A | 45 | 23 | 68 | 31.25 |
| C1A | 18 | 3 | 21 | 27.4 |
| C2A | 855 | 751 | 1606 | 44.24 |
| C3A | 211 | 147 | 358 | 28.36 |

As shown in Table 5, the number of fish eyes having an outer diameter greater than 500 µm was less than 25/m² in the polyester composition films of Examples 1A to 3A, the number of fish eyes having an outer diameter greater than or equal to 200 µm and less than or equal to 500 µm was less than 50/m² in the polyester composition films of Examples 1A to 3A, and the total number of fish eyes was less than 75/m² in the polyester composition films of Examples 1A to 3A.

As shown in Table 5, the haze of the polyester composition films of Examples 1A to 3A was less than or equal to 35%. Specifically, the haze of the polyester composition films of the polyester composition films of Examples 1A to 3A was less than or equal to 32%.

### Discussion of Comprehensive Effect

To clarify the effects between the polyester compositions of Examples 1 to 3 and Comparative Examples 1 to 3 and the effects between the polyester composition films of Examples 1A to 3A and Comparative Examples 1A to 3A, the results of Test Examples 5 to 8 are listed in Table 6.

**Table 6: acid value of Examples 1 to 3 (E1 to E3) and Comparative Examples 1 to 3 (C1 to C3) (AV), and the difference of acid values of E1 to E3 and C1 to C3 before and after it was placed in the condition of high temperature and humidity for 3 hours (ΔAV), total number of fish eyes in Examples 1A to 3A (E1A to E3A) and Comparative Examples 1A to 3A (C1A to C3A), and haze of E1A to E3A and C1A to C3A (unit of acid value and difference of two acid values: meq KOH/kg; unit of total number of fish eyes: 1/m²)**

| Polyester Composition | | | Polyester Composition Film | | |
|---|---|---|---|---|---|
| Sample | AV | ΔAV | Sample | Total Number of Fish Eves | Haze (%) |
| E1 | 12.81 | 6.2 | E1A | 25 | 29.78 |
| E2 | 20.74 | 6.39 | E2A | 46 | 29.15 |
| E3 | 9.86 | 7.27 | E3A | 68 | 31.25 |
| C1 | 49.52 | 15.81 | C1A | 21 | 27.4 |
| C2 | 17.8 | 6.1 | C2A | 1606 | 44.24 |
| C3 | 20.3 | 10.7 | C3A | 358 | 28.36 |

As shown in the results of Test Examples 5, 6, 7, and 8, the difference of acid values of the polyester compositions of Examples 1 to 3 and Comparative Examples 1 to 3 before and after they were placed in the condition of high temperature and humidity for 3 hours was less than 8 meq KOH/kg, and the polyester composition films made of aforesaid polyester compositions had total number of fish eyes less than or equal to 75/m².

On the contrary, the difference of acid values of the polyester composition of Comparative Example 1 before and after it was placed in the condition of high temperature and humidity for 3 hours was greater than 15 meq KOH/kg, which showed that the stability in the condition of high temperature and humidity of the polyester composition of Comparative Example 1 was bad. Hence, the stability of the polyester composition which was not modified with monoepoxy compound was not good, which was not able to resist the harsh condition of high temperature and humidity.

Although the difference of acid values of the polyester composition of Comparative Example 2 before and after it was placed in the condition of high temperature and humidity for 3 hours was less than 10 meq KOH/kg, the total number of fish eyes in the polyester composition film of Comparative Example 2A was greater than 20 times of the total number of fish eyes in the polyester composition films of Example 1A to 3A. The haze of the polyester composition film of Comparative Example 2A was greater than 44%. Hence, the polyester composition film made of the polyester composition modified with multiepoxy compound had defects of high number of fish eyes, high haze, and low appearance quality.

The difference of acid values of the polyester composition of Comparative Example 3 before and after it was placed in the condition of high temperature and humidity for 3 hours was greater than 10 meq KOH/kg, and the total number of fish eyes in the polyester composition film of Comparative Example 3A was greater than 300/m², which showed the polyester composition of Comparative Example 3 has low stability in the condition of high temperature and humidity, the appearance quality of the polyester composition film of Comparative Example 3A was lower than that of the polyester composition films of Examples 1A to 3A. Hence, the polyester composition modified with isocyanate had low stability, and the polyester composition film made of aforesaid polyester composition had defects of high number of fish eyes, and low appearance quality.

In summary, the polyester composition comprises an aliphatic-aromatic copolyester modified with monoepoxy compound. The acid value of the polyester composition is less than 25 meq KOH/kg. Aforesaid polyester composition has great stability in the condition of high temperature and humidity. The polyester composition film made of aforesaid polyester composition has merits of few fish eyes and high appearance quality. Aforesaid merits are beneficial to extend the application of polyester product and to increase the value of polyester product.

## Claims

1. A polyester composition **characterized in that** the polyester composition comprises an aliphatic-aromatic copolyester modified with a monoepoxy compound and an acid value of the polyester composition is lower than 25 milliequivalents KOH/kg (meq KOH/kg).

2. The polyester composition as claimed in claim 1, **characterized in that** the aliphatic-aromatic copolyester modified with the monoepoxy compound is free of any amide group.

3. The polyester composition as claimed in claim 1 or 2, **characterized in that** the polyester composition has a weight average molecular weight (Mw) greater than or equal to 100000 and less than or equal to 150000 or a number average molecular weight (Mn) greater than or equal to 20000 and less than or equal to 40000.

4. The polyester composition as claimed in any one of claims 1 to 3, **characterized in that** the aliphatic-aromatic copolyester modified with the monoepoxy compound is represented by the following Formula (I): 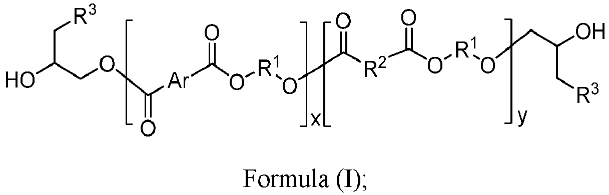 wherein, Ar is a phenylene group, R¹ is an alkylene group having 2 to 12 carbon atoms, R² is an alkylene group having 2 to 12 carbon atoms, R³ is an ether group having 4 to 30 carbon atoms or an ester group having 4 to 30 carbon atoms, and the ratio of x to y is greater than or equal to 0.8 and less than or equal to 1.2.

5. The polyester composition as claimed in claim 4, **characterized in that** Ar is

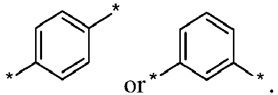

6. The polyester composition as claimed in claim 4 or 5, **characterized in that** R³ is a straight-chain ester group having 4 to 16 carbon atoms, a branched ester group having 4 to 16 carbon atoms, a straight-chain ether group having 4 to 16 carbon atoms or a branched ether group having 4 to 16 carbon atoms.

7. The polyester composition as claimed in any one of claims 1 to 6, **characterized in that** the monoepoxy compound is aliphatic glycidyl ether (C12-C14), neodecanic acid glycidyl ester, n-butyl glycidyl ether or 2-ethylhexyl glycidyl ether.

8. The polyester composition as claimed in any one of claims 1 to 7, **characterized in that** the melt flow index (MI) of the polyester composition is greater than or equal to 1 g/10 min and less than or equal to 30 g/10 min.

9. The polyester composition as claimed in any one of claims 1 to 8, **characterized in that** the intrinsic viscosity (IV) of the polyester composition is greater than or equal to 0.5 dL/g and less than or equal to 2.0 dL/g.

10. A preparation method of a polyester composition **characterized in that** the preparation method comprises steps of:
Step (a): esterifying an aliphatic dicarboxylic acid having 4 to 14 carbon atoms and an aromatic dicarboxylic acid or diester having 8 to 12 carbon atoms with an aliphatic diol having 2 to 12 carbon atoms to render an esterified compound; wherein, the molar ratio of the aliphatic dicarboxylic acid having 4 to 14 carbon atoms to the aromatic dicarboxylic acid or diester having 8 to 12 carbon atoms ranges from 1:0.8 to 1:1.2, and the molar ratio of the sum of the aliphatic dicarboxylic acid having 4 to 14 carbon atoms and the aromatic dicarboxylic acid or diester having 8 to 12 carbon atoms to the aliphatic diol having 2 to 12 carbon atoms ranges from 1:1.5 to 1:2.5;
Step (b): subjecting the esterified compound to condensation polymerization in the presence of a catalyst to render a condensation polymer; and
Step (c): reacting the condensation polymer with a monoepoxy compound to render the polyester composition; wherein, the weight of the monoepoxy compound is greater than or equal to 6000 ppm and less than or equal to 12000 ppm based on the total weight of the aliphatic dicarboxylic acid having 4 to 14 carbon atoms, the aromatic dicarboxylic acid or diester having 8 to 12 carbon atoms, and the aliphatic diol having 2 to 12 carbon atoms.

11. The preparation method of the polyester composition as claimed in claim 10, **characterized in that** the weight of the catalyst is greater than or equal to 750 ppm and less than or equal to 1000 ppm based on the total weight of the aliphatic dicarboxylic acid having 4 to 14 carbon atoms, the aromatic dicarboxylic acid or diester having 8 to 12 carbon atoms, and the aliphatic diol having 2 to 12 carbon atoms.

12. The preparation method of the polyester composition as claimed in claim 10 or 11, **characterized in that** the monoepoxy compound is aliphatic glycidyl ether (C12-C14), neodecanic acid glycidyl ester, n-butyl glycidyl ether or 2-ethylhexyl glycidyl ether.

13. The preparation method of the polyester composition as claimed in any one of claims 10 to 12, **characterized in that** the temperature of the esterification in Step (a) is greater than or equal to 180°C and less than or equal to 260°C, and the pressure of the esterification in Step (a) is greater than or equal to 40 kPa and less than or equal to 120 kPa.

14. The preparation method of the polyester composition as claimed in any one of claims 10 to 13, **characterized in that** the temperature of the condensation polymerization in Step (b) is greater than or equal to 180°C and less than or equal to 280°C, and the pressure of the condensation polymerization in Step (b) is less than 0.1 kPa.

15. The preparation method of the polyester composition as claimed in any one of claims 10 to 14, **characterized in that** the temperature of the reaction in Step (c) is greater than or equal to 160°C and less than or equal to 240°C, and the pressure of the reaction in Step (c) is less than 0.1 kPa.

16. A polyester composition film **characterized in that** the polyester composition film comprises the polyester composition as claimed in any one of claims 1 to 9, and that the number of fish eyes having an outer diameter greater than 200 µm is less than 100/m².

17. The polyester composition film as claimed in claim 16, **characterized in that** the haze of the polyester composition film is less than or equal to 35%.
